**Europäisches Patentamt**

**European Patent Office**

**Office européen des brevets**

(19)

(11) Veröffentlichungsnummer : **0 355 144 B1**

(12) # EUROPÄISCHE PATENTSCHRIFT

(45) Veröffentlichungstag der Patentschrift :
**11.11.92 Patentblatt 92/46**

(51) Int. Cl.$^5$ : **G01K 13/08,** G01P 3/48,
**H02K 11/00, H02K 23/66**

(21) Anmeldenummer : **89901459.1**

(22) Anmeldetag : **20.01.89**

(86) Internationale Anmeldenummer :
**PCT/DE89/00029**

(87) Internationale Veröffentlichungsnummer :
**WO 89/07247 10.08.89 Gazette 89/18**

---

(54) **KOMBINIERTER DREHZAHL/TEMPERATUR-MESSWERTAUFNEHMER.**

---

(30) Priorität : **06.02.88 DE 3803597**

(43) Veröffentlichungstag der Anmeldung :
**28.02.90 Patentblatt 90/09**

(45) Bekanntmachung des Hinweises auf die
Patenterteilung :
**11.11.92 Patentblatt 92/46**

(84) Benannte Vertragsstaaten :
**DE GB IT**

(56) Entgegenhaltungen :
**CH-A- 463 818
DE-B- 1 139 581
PATENT ABSTRACTS OF JAPAN, Bd. 8, Nr.
228 (P-308)(1665), 19. Oktober 1984;& JP-
A-59108960**

(56) Entgegenhaltungen :
**NEUES AUS DER TECHNIK, Nr. 1, 1. Januar
1968, Würzburg, DE; "Temperaturmessung
mit Leuchtstoffen", siehe Seite 2,Zusammenfassung Nr. 814
WESTERN ELECTRIC TECHNICAL DIGEST,
Nr. 27, Juli 1972, New York, US; R.M. LUMLEY:
"Apparatus for measuring rotational speedand linear displacement of rotating shaft";
Seiten 31,32**

(73) Patentinhaber : **ROBERT BOSCH GMBH
Postfach 30 02 20
W-7000 Stuttgart 30 (DE)**

(72) Erfinder : **HORNUNG, Friedrich
Am Ochsenwald 10 A
W-7000 Stuttgart 80 (DE)**
Erfinder : **STROHBECK, Walter
29 Granton Avenue
Endeavour Hills, VIC, 3802 (AU)**
Erfinder : **WANNKE, Dietmar
Mettnaustr. 32
W-7410 Reutlingen 24 (DE)**

**Beschreibung**

Stand der Technik

Die Erfindung geht aus von einer Vorrichtung zur berührungslosen Messung der Drehzahl nach der Gattung des Hauptanspruchs. Üblicherweise werden Markierungen auf der Welle angebracht, die abgetastet werden und zur Bestimmung der Drehzahl der Welle dienen.

Es ist häufig auch erforderlich, zusätzlich Temperaturen an rotierenden Wellen zu messen, um Regelvorgänge einzuleiten oder Schäden von den rotierenden Wellen bzw. den elektrischen Maschinen abzuwenden. Es ist aus der DE-OS 28 52 679 bekannt, daß zur kontaktlosen Temperaturübertragung auf optischem Weg lichtemittierende Sendedioden verwendet werden, die mit einer aufwendigen elektronischen Schaltung auf der Welle angebracht sind. Mit dieser Anordnung werden Temperaturen an der Welle gemessen und auf einen feststehenden Aufnehmer übertragen; eine Ermittlung der Drehzahl ist mit dieser Schaltungsanordnung nicht möglich.

Aus der JP 108960/59 (A) ist ein Drehzahlsensor bekannt, der berührungslos auch die Temperatur einer sich drehenden Welle erfassen kann. Zu diesem Zweck wurden einzelne Ferritmagnete am Umfang der Welle angeordnet. Die Ferritmagnete ändern in Abhängigkeit von der Temperatur ihren magnetischen Fluß, der in einer Meßspule eines Sensors eine entsprechende Spannung induziert. Die induzierte Spannung wird mit einem Temperatur-Referenzwert verglichen und entsprechend ausgewertet.

Aus der CH-PS 463 818 ist ein induktiver Meßfühler zur berührungslosen Temperaturbestimmung an einer rotierenden Welle bekannt, bei der am äußeren Umfang Ferritelemente mit unterschiedlicher Curie-Temperatur angeordnet sind. Dabei sind die Curie-Temperaturen in gleichmäßigen Temperaturschritten abgestuft. Je nach Temperatur werden unterschiedlich viele Ferritelemente paramagnetisch, deren Anzahl mit einer Induktionsspule gezählt werden. Die Zählung wird synchronisiert mit einem zusätzlichen Ferritelement, das zur Markierung des Startpunktes dient.

Des weiteren sind aus der Zeitschrift "Neues aus der Technik", Nr. 1, 1. Januar 1968, "Temperaturmessung mit Leuchtstoffen" Leuchtstoffe bekannt, deren Lichtausbeute in Abhängigkeit von der Temperatur verändert wird. Zur Temperaturmessung wird der Leuchtstoff am Umfang der Welle aufgetragen. Mit einem Strahlungspyrometer wird die Lichtausbeute gemessen, die ein Maß für die Temperatur der Welle ist.

Ein weiterer Vorschlag zur berührungslosen Messung der Temperatur einer rotierenden Welle ist der DE-AS 11 39 581 entnehmbar. Auf der Oberfläche der Welle wird eine Strahlungsfläche mit einem schwarzen Anstrich gebildet mit der Folge, daß sich die Strahlungsfläche angenähert wie ein schwarzer Körper verhält, der eine Wärmestrahlung an seine Umgebung abgibt. Der Empfänger ist ebenfalls als schwarzer Körper ausgebildet, um die Strahlung der Welle möglichst reflexionsarm aufzunehmen. Die Strahlung wird auf ein Thermoelement geleitet, das ein der Temperatur der rotierenden Welle entsprechendes elektrisches Signal abgibt.

Vorteile der Erfindung

Die erfindungsgemäße Vorrichtung mit den kennzeichnenden Merkmalen des Hauptanspruchs hat demgegenüber den Vorteil, daß aud der rotierenden Welle keine elektronischen Bauteile montiert werden müssen und damit auch keine Stromversorgung erforderlich ist. Weiterhin ist vorteilhaft, daß für die zwei voneinander unabhängigen physikalischen Größen Temperatur und Drehzahl bzw. Drehfrequenz nur ein Sensor benötigt wird, der als Geber einem entsprechenden Empfänger die Meßwerte übermittelt. Durch die in den Unteransprüchen aufgeführten Maßnahmen sind vorteilhafte Weiterbildungen und Verbesserungen der im Hauptanspruch angegebenen Vorrichtung möglich. Besonders voiteilhaft ist, daß der Sensor eine kleine Bauform aufweist und dadurch der Montageort auf der rotierenden Welle nahezu beliebig wählbar ist. Durch die Temperaturerfassung eignet sich der Sensor besonders auch als Grenzwertmelder, da er nach Überschreiten einer vorgegebenen Temperatur beispielsweise einen Elektromotor abschaltet, um ihn vor Schäden zu schützen.

Weiterhin ist vorteilhaft, als Sensor Flüssigkristall-Anzeige zu verwenden, die bei Erreichen einer vorgegebenen Temperatur eine Farbänderung aufweisen. Sie können direkt auf die Welle aufgeklebt werden. In weiterer Ausgestaltung der Erfindung ist die Verwendung eines Bimetallstreifens als Träger für eine Reflexionslichtschranke vorteilhaft. Auf der Welle sind dann auf einfache Weise nur noch beispielsweise trapezförmige oder treppenförmige Markierungen anzubringen. Auch ist vorteilhaft, in der Helligkeit abgestufte Farbmarkierungen auf der Welle anzubringen, die von einem einfachen Sensor, dessen Lichtempfindlichkeit temperaturabhängig ist, zur Drehzahl- und Temperaturbestimmung verwendet werden.

Zeichnung

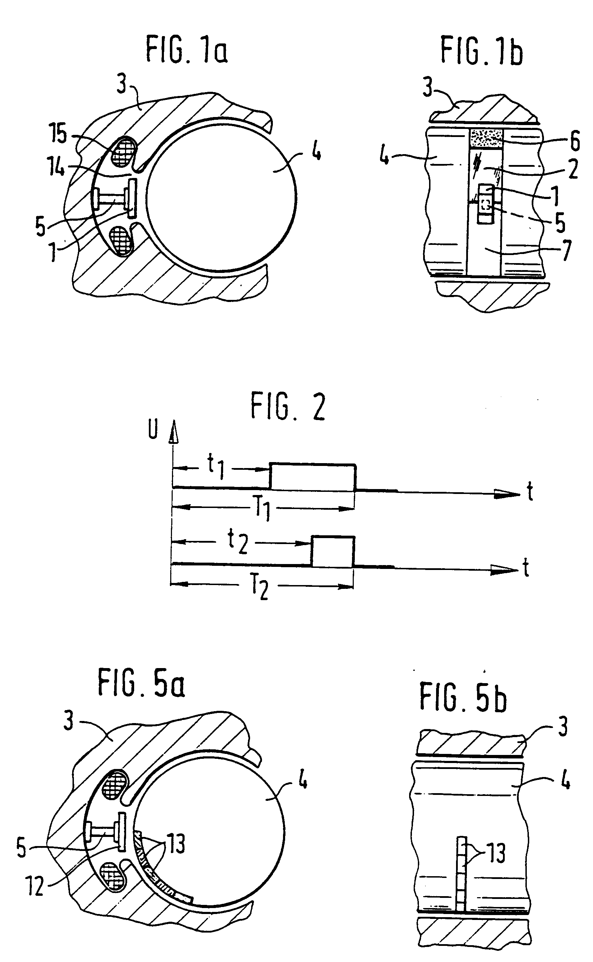

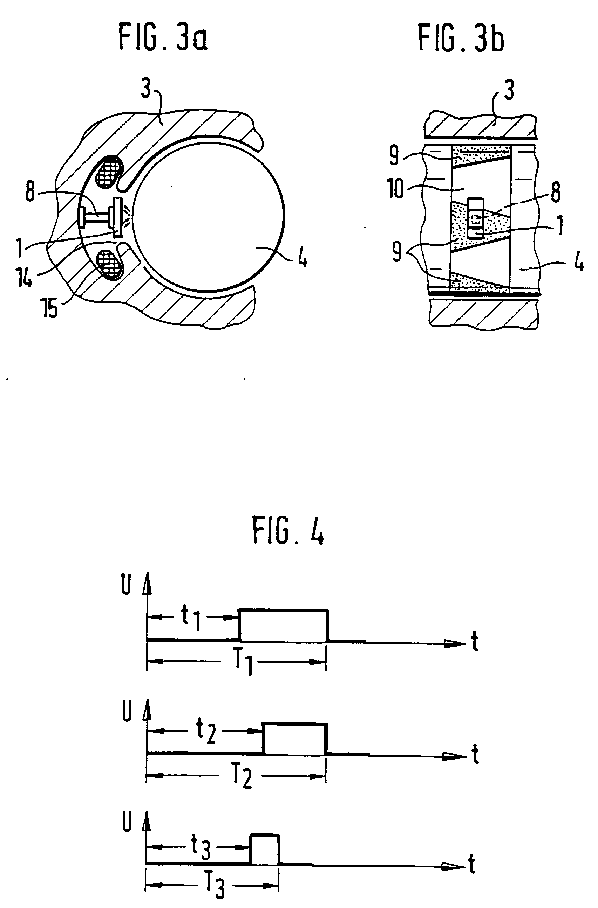

Ausführungsbeispiele der Erfindung sind in der Zeichnung dargestellt und in der nachfolgenden Beschreibung näher erläutert. Es zeigen Figuren 1a und 1b ein erstes Ausführungsbeispiel der Erfindung, Figur 2 gibt zwei Diagramme zur Erläuterung der Funktion der Erfindung gemäß Figur 1 an, Figur 3a und 3b ein zweites Ausführungsbeispiel und Figur 4 drei Diagramme zur Erläuterung der Funktion gemäß der Figur 3 und die Figuren 5a und 5b ein drittes Ausführungsbeispiel.

Beschreibung der Ausführungsbeispiele

Der Grundgedanke der vorliegenden Erfindung besteht darin, daß mit möglichst geringem Aufwand Meßsignale von den physikalischen Größen Temperatur und Drehzahl kontaktlos von rotierenden Wellen erfaßt und von einem feststehenden Empfänger ausgewertet werden, ohne daß aufwendige elektronische Schaltungen auf der rotierenden Welle 4 vorzusehen sind. Auch wird nur ein Sensor benötigt, der sowohl die Temperatur wie auch die Drehzahl der Welle 4 erfaßt.

Figur 1a zeigt im Schnitt eine Reflexionslichtschranke 1, die auf einem feststehenden Träger 5 befestigt ist, der z.B. im polneutralen Luftraum 14 zwischen dem Feldpaket 3 und der Welle 4 eines Elektromotors montiert ist. Der Sender der Reflexionslichtschranke 1 ist so justiert, daß das ausgesandte Licht von der Welle 4 zumindest teilweise reflektiert und vom Empfänger der Reflexionslichtschranke 1 wieder aufgenommen wird. Weiterhin sind im Luftraum 14 die angeschnittenen Wicklungen 15 des Feldpakets 3 des Elektromotors zu sehen. Auf der Welle 4 ist gemäß Figur Ib ringförmig ein Farbstreifen aufgetragen, der ein Dunkelfeld 6 und ein Hellfeld 7 aufweist. Angrenzend an das Dunkelfeld 6 ist auf dem Hellfeld 7 ein Farbcodestreifen befestigt, der beispielsweise als Flüssigkristall-Streifen 2 ausgebildet ist. Weiterhin ist in Draufsicht die Reflexionslichtschranke 1 und der Träger 5 zu sehen.

Im folgenden wird die Wirkungsweise dieses Ausführungsbeispiels beschrieben.

Bei dem Ausführungsbeispiel nach Figur 1 erhält der Empfänger der Reflexionslichtschranke 1 nur dann reflektierte Lichtstrahlen, wenn das Hellfeld 7 der Welle 4 an der Reflexionslichtschranke 1 vorbeiläuft. Läuft das Dunkelfeld 6 der Welle 4 an der Reflexionslichtschranke 1 vorbei, erhält der Empfänger keine reflektierten Lichtstrahlen. Geht man davon aus, daß die Schalttemperatur des Flüssigkristall-Streifens 2 noch nicht erreicht ist, dann ist er farbidentisch mit dem Hellfeld 7. Das Hellfeld 7 weist die Helligkeit bzw. Farbe des Flüssigkristall-Streifens 2 vor dem Farbumschlag, das Dunkelfeld 6 die Helligkeit bzw. Farbe nach dem Farbumschlag auf. Der Fototransistor der Reflexionslichtschranke 1 wird zum Hellfeld 7 keinen Unterschied bezüglich der Lichtreflexion bemerken. Der Fototransistor der Reflexionslichtschranke 1 gibt kein Spannungssignal an eine anzuschließende Auswerteschaltung ab. In Figur 2 ist dieser Spannungsverlauf im oberen Diagramm dargestellt. Bei jeder Umdrehung der Welle 4 erscheint abwechselnd das Dunkelfeld 6 bzw. Hellfeld 7. Dabei entspricht eine Umdrehung der Welle 4 der Periodendauer $T_1$. Die Pulsdauer $t_1$ am Ausgang der Reflexionslichtschranke ist in diesem Fall der Länge des Hellfeldes 7 zugeordnet. Das Verhältnis aus Pulszeit $t_1$ zur Periodendauer $T_1$ ist ein Maß für die Temperatur der Welle 4. Steigt im Laufe des Betriebes die Temperatur der Welle 4 infolge eines Fehlers zu unzulässig hohen Werten an, dann wird die Schalttemperatur des Flüssigkristall-Streifens 2 überschritten und der Flüssigkristall-Streifen 2 einen Farbumschlag aufweisen. In diesem Fall ist der Flüssigkristall-Streifen etwa so dunkel wie das Dunkelfeld 6 der Welle 4. Während einer Umdrehung der Welle 4 wird nun der Ausgang der Reflexionslichtschranke 1 einen kürzeren Spannungsimpuls abgeben als im vorigen Fall. In Figur 2 ist aus dem unteren Diagramm zu erkennen, daß das neue Tastverhältnis von Pulsdauer $t_2$ zur Periodendauer $T_2$ größer geworden ist. Das Verhältnis von Pulsdauer t zur Periodendauer T ist also ein Maß für die Temperatur der Welle 4. Diese Änderung des Verhältnisses tritt schlagartig ein, wenn die Schalttemperatur des Flüssigkristall-Streifens 2 überschritten wird. Fällt die Temperatur unter den Schaltpunkt des Flüssigkristall-Streifens 2, dann erhält das Tastverhältnis wieder den Änfangswert. Die Änderung des Tastverhältnisses kann weiter verwertet oder angezeigt werden. Es ist denkbar, daß bei Änderung des Tastverhältnisses beispielsweise eine Alarmabschaltung des Motors erfolgt, um ihn vor Schaden durch Überlast oder dergleichen zu schützen. Die Schalttemperatur des Flüssigkristall-Streifens 2 ist durch die Zusammensetzung des kristallinen Aufbaus festgelegt und kann im nachhinein nicht mehr verändert werden. Es ist möglich, die Flüssigkristall-Streifen 2 so herzustellen, daß sie bei nahezu jedem gewünschten Temperaturpunkt schalten.

Ordnet man beispielsweise auf dem Umfang der Welle 4 statt einem Flüssigkristall-Streifen 2 mehrere Segmente so an, daß sie nach steigenden oder fallenden Schalttemperaturen geordnet sind, dann wird man in Abhängigkeit von der Temperatur am Ausgang der Reflexionslichtschranke 1 unterschiedliche Tastverhältnisse feststellen (siehe Figur 5a, 5b). Dann wird man je nach Anzahl der verwendeten Flüssigkristall-Streifen 2 und deren Temperaturschaltstufen eine entsprechend feine Auflösung des Tastverhältnisses am Ausgang der Reflexionslichtschranke 1 erhalten. Anstelle der Reflexionslichtschranke 1 können auch andere lichtsensitive Empfänger wie beispielsweise Fotodioden oder Fotowiderstände verwendet werden, wenn eine zusätzliche Lichtquelle vorgesehen ist, deren Licht von der markierten Welle 4 reflektiert wird. Die Drehzahl der Welle 4 wird dadurch ermittelt, daß jeweils die positiven bzw. negativen Flanken des Ausgangsimpulses pro Zeiteinheit bewertet werden.

Ein weiteres Ausführungsbeispiel ist in Figur 3a und 3b in der Draufsicht und Seitenansicht dargestellt, wobei hier nur auf die Unterschiede zu Figur 1 eingegangen wird. Bier wird dir Reflexionslichtschanke 1 auf einen Bimetallträger 8 montiert. Der Bimetallträger 8 ist so ausgerichtet, daß er in Abhängigkeit von der Temperatur eine Auslenkung in axialer Richtung der Welle 4 aufweist. Auf der Welle 4 ist ein Farbring aufgetragen, der in abwechselnder Reihenfolge trapezförmige Dunkelfelder 9 und trapezförmige Bellfelder 10 aufweist. Die trapezförmigen Dunkelfelder 9 und trapezförmige Hellfelder 10 können auch so ausgebildet sein, daß sich dreieckige Flächen ergeben, deren Kanten entweder gerade oder treppenförmig ausgebildet sind. Die Funktionsweise dieses Ausführungsbeispiels ist wie folgt. Die Reflexionslichtschranke 1 ist mit dem Bimetallträger 8 so angeordnet, daß bei jeder Umdrehung der Welle 4 die Reflexionslichtschranke 1 abwechselnd helle und dunkle Felder erkennt. Aufgrund der zu der Drehrichtung der Welle 4 schräg verlaufenden Grenzlinien der trapezförmigen Dunkelfelder 9 und trapezförmigen Hellfeder 8 erkennt die Reflexionslichtschranke 1 in Abhängigkeit von der Temperatur unterschiedlich breite Hell- bzw. Dunkelstreifen. Da sich der Bimetallträger 8 in Abhängigkeit von der Temperatur parallel zur Achse der Welle 4 bewegt, ändert sich auch am Ausgang der Reflexionslichtschranke 1 das Tastverhältnis in Abhängigkeit von der Temperatur. In diesem Ausführungsbeispiel wird die Temperatur gemessen, die vom Bimetallträger 8 im Luftstrom erfaßt wird. Die Tastverhältnisse bei unterschiedlichen Temperaturen sind aus Figur 4 ersichtlich. Das zu messende Temperaturintervall kann leicht durch eine entsprechende Anordnung und Dimensionierung des Bimetallträgers 8 eingestellt werden. Wie im ersten Ausführungsbeispiel wird die Drehzahl bestimmt durch die Zeit zwischen dem Auftreten zweier konstanter Flanken, z. B. der fallenden Flanken (siehe Figur 4). Bei diesem Ausführungsbeispiel ist besonders vorteilhaft, daß bei einer Umdrehung der Welle 4 mehrere Meßdaten für die Drehzahl und die Temperatur übertragen werden, so daß Fehlmessungen als Folge von Störeinflüssen nahezu ausgeschaltet sind und das Meßergebnis sehr zuverlässig ist.

Wenn speziell die Temperatur des Ankers 4 oder der Ankelwicklung einer elektrischen Maschine erfaßt werden soll, werden die Flüssigkristall elemente vorteilhafterweise am Ankerumfang oder am Wickelkopf des Ankers angebracht. Wenn die Feldwicklung einer elektrischen Maschine erfaßt werden soll, wird vorteilhafterweise der Sensor bzw. dessen Träger in thermischen Kontakt mit dem Eisen oder dem Wickelkopf des Feldes gebracht.

Ein weiteres Ausführungsbeispeil ist in den Figuren 5a und 5b dargestellt.

Das weitere Ausführungsbeispiel nutzt den Effekt aus, daß der Sensor eine temperaturabhängige Lichtempfindlichkeit aufweist. Auf der Welle 4 sind in einem Farbring unterschiedlich helle Farbsegmente mit zunehmender bzw. fallender Helligkeit (siehe Figur 5b) angeordnet. Ein dem Farbring gegenüberliegend angeordneter, lichtempfindlicher Sensor wird in Abhängigkeit von der Temperatur einige Farbsegmente erkennen und entsprechende Spannungsimpulse liefern. Aus diesen wird wie bei den vorhergehenden Ausführungsbeispielen die Temperatur und Drehzahl der Welle abgeleitet.

**Patentansprüche**

1. Vorrichtung zur berührungslosen Erfassung der Drehzahl und der Temperatur einer rotierenden Welle mit auf dem Umfang der Welle ringförming, fest angebrachten Markierugen und mit einem außerhalb de Welle gegenüber den Markierungen angeordneten Sensor, der die Markierungen erfaßt und entsprechende elektrische Impulse abgibt, dadurch gekennzeichnet, daß die Markierungen (2, 6, 7) Farbstreifen (2) aufweisen, die ohne Zwischenraum angeordnet sind, daß wenigstens ein Farvstreifen (2) bei einer bestimmten Temperatur seine Helligkeit oder Farbe schlagartig ändert, daß der Sensor (1) einen Lichtaufnehmer aufweist, der auf die schlagartig geänderte Helligkeit oder Farbe des wenigstens einen Farbstreifens (2) anspricht und entsprechend dem wenigstens einen erfaßten Farbstreifen eine elektrische Impulsfolge abgibt, wobei aus der Zeitspanne zwischen dem Auftreten zweier gleichgerichteter Flanken der Impulsfolge als Periodendauer (T1, T2, T3) die Drehzahl und aus dem Tastverhältnis, das das Verhältnis aus der Zeitspanne zwischen dem Auftreten zweier ungleich gerichteter Flanken zur Periodendauer (T1, T2, T3) ist, die Temperatur der Welle (4) ermittelt wird.

2. Vorrichtung nach Anspruch 1, dadurch gekennzeichnet, daß der Farbstreifen (2) ein Flüssigkristallstreifen ist.

3. Vorrichtung zur berührungslosen Erfassung der Drehzahl und er Umgebungstemperatur einer rotierenden Welle mit auf dem Umfang der Welle ringförming, fest angebrachten Markierungen und mit einem außerhalb der Welle gegenüber den Markierungen angeordneten Sensor, der die Markierungen erfaßt und entsprechende elektrische Impulse abgibt, dadurcht gekennzeichnet, daß der Sensor (1) in der Weise getragen wird, daß er sich in Abhängigkeit von der Temperatur in der Umgebung der Welle (4) parallel zur Achse der Welle (4) und damit relativ zu den Markierungen (9, 10) auf der Welle (4) bewegt, daß die Markierungen (9, 10) trapezförmig, dreieckig oder treppenförming ausgebildet sind und sich nicht Abhängigkeit von der Temperatur ändern, und daß der Sensor (1) je nach seiner relativen Lage zu den Markierungen (9, 10) aus den erkannten Teilen der Markierungen (9, 10) eine elektrische Impulsfolge abgibt, wobei aus der Zeitspanne zwischen dem Auftreten zweier gleichgerichteter Flanken der Impulsfolge als Periodendauer (T1, T2, T3) die Drehzahl und aus dem Tastverhältnis, das das Verhältnis aus der Zeitspanne zwischen dem Auftreten zweier ungleich gerichteter Flanken zur Periodendauer (T1, T2, T3) ist, die Umgebungstemperatur der Welle (4) ermittelt wird (Fig. 3a, 3b).

4. Vorrichtung nach einem der vorhergehenden Ansprüche, dadurch gekennzeichnet, daß der Sensor (1) zur Erkennung der Markierungen (2, 6, 7; 9, 10; 13) eine vorzugsweise als integrierte Schaltung ausgebildete Reflexionslichtschranke aufweist.

5. Vorrichtung zur berührungslosen Erfassung der Drehzahl und der Umgebungstemperatur einer rotierenden Welle mit auf dem Umfang der Welle ringförmig, fest angebrachten Markierungen und mit einem außerhalb der Welle gegenüber den Markierungen angeordneten Sensor, der die Markierungen erfaßt und entsprechende elektrische Impulse abgibt, dadurch gekennzeichnet, daß die Markierungen (13) rechteckförming ausgebildete Farbstreifen aufweisen, die in der Helligkeit oder Farbe unterschiedlich abgestuft und mit zunehmender oder abnehmender Helligkeit ohne Zwischenraum angeordnet sind, wobei sie ihre Eigenschaften nicht in Abhängigkeit von der Temperatur ändern, daß der Sensor (12) feststehend angeordnet ist und seine Empfindlichkeit bezüglich der Farbe der Farbstreifen entsprechend der Temperatur in der Umgebung der Welle (4) ändert, daß der Sensor (12) in Abhängigkeit von seiner Empfindlichkeit unterschiedliche viele Farvstreiten erkennt und entsprechend den erkannten Farbstreifen eine elektrische Impulsfolge abgibt, wobei aus der Zeitspanne zwischen dem Auftreten zweier gleichgerichteter Flanken der Impulsfolge als Periodendauer (T1, T2, T3) die Drehzahl und aus dem Tastverhältnis, das das Vehältnis aus der Zeitspanne zwischen dem Auftreten zweier ungleich gerichteter Flanken zur Periodendauer (T1, T2, T3) ist, die Umgebungstemperatur der Welle (4) ermittelt wird (Fig. 5a, 5b).

6. Vorrichtung nach Anspruch 5, dadurch gekennzeichnet, daß der Sensor (12) zur Erkennung der Markierungen (13) in thermischem Kontakt zur Wärmequelle, vorzugsweise zum Eisen oder zur Wicklung des Feldes eines Motors oder Generators steht.

## Claims

1. Device for the contactless detection of the speed of revolution and of the temperature of a rotating shaft with annular marks permanently made on the circumference of the shaft and with a sensor which is arranged outside the shaft with respect to the marks and detects the marks and emits corresponding electrical pulses, characterised in that the marks (2, 6, 7) have colour strips (2) which are arranged without intermediate space, in that at least one colour strip (2) suddenly changes its brightness or colour at a specific temperature, in that the sensor (1) has a light detector which responds to the suddenly changed brightness or colour of the at least one colour strip (2) and emits an electrical pulse sequence in accordance with the at least one detected colour strip, the speed of revolution being identified from the time period between the occurrence of two edges of the pulse sequence directed in the same direction as period duration (T1, T2, T3) and the temperature of the shaft (4) being identified from the duty cycle, which is the ratio of the time period between the occurrence of two edges directed in different directions to the period duration (T1, T2, T3).

2. Device according to claim 1, characterised in that the colour strip (2) is a liquid crystal strip.

3. Device for the contactless detection of the speed of revolution and of the ambient temperature of a rotating shaft with annular marks permanently made on the circumference of the shaft and with a sensor which is arranged outside the shaft with respect to the marks and detects the marks and emits corresponding electrical pulses, characterised in that the sensor (1) is borne in such a way that it moves parallel to the axis of the shaft (4) and thus in relation to the marks (9, 10) on the shaft (4) as a function of the temperature in the surroundings of the shaft (4), in that the marks (9, 10) are trapezoidal, triangular or step-shaped and do not change as a function of the temperature, and in that the sensor (1) emits an electrical pulse sequence depending on its position in relation to the marks (9, 10) derived from the detected parts of the marks (9, 10), the speed of revolution being identified from the time period between the occurrence of two edges of the pulse sequence directed in the same direction as period duration (T1, T2, T3) and the ambient temperature of the shaft (4) being identified from the duty cycle, which is the ratio of the time period between the occurrence of two edges directed in different directions to the period duration (T1, T2, T3) (Figs. 3a, 3b).

4. Device according to one of the preceding claims, characterised in that the sensor (1) has, for the purpose of detecting the marks (2, 6, 7; 9, 10; 13), a reflection light barrier which is preferably constructed as an integrated circuit.

5. Device for the contactless detection of the speed of revolution and of the ambient temperature of a rotating shaft with annular marks permanently made on the circumference of the shaft and with a sensor which is arranged outside the shaft with respect to the marks and detects the marks and emits corresponding electrical pulses, characterised in that the marks (13) have rectangular colour strips which are graduated differently in brightness or colour and are arranged with increasing or decreasing brightness without intermediate space, in which case they do not change their properties as a function of the temperature, in that the sensor (12) is arranged in a stationary fashion and its sensitivity with respect to the colour of the colour strips changes in accordance with the temperature in the surroundings of the shaft (4), in that the sensor (12) detects a differing number of colour strips as a function of its sensitivity and emits an electrical pulse sequence in accordance with the detected colour strips, the speed of revolution being identified from the time period between the occurrence of two edges of the pulse sequence directed in the same direction as period duration (T1, T2, T3) and the ambient temperature of the shaft (4) being identified from the duty cycle, which is the ratio of the time period between the occurrence of two edges directed in different directions to the period duration (T1, T2, T3) (Figs. 5a, 5b).

6. Device according to claim 5, characterised in that, for the purpose of detecting the marks (13), the sensor (12) is in thermal contact with the heat source, preferably with the iron or the field winding of a motor or generator.

## Revendications

1. Dispositif pour détecter sans contact la vitesse de rotation et la température d'un arbre tournant avec des repères disposés de façon solidaire, de forme annulaire sur le pourtour de l'arbre et avec un capteur disposé en dehors de l'arbre en regard des repères, capteur qui détecte les repères et délivre des impulsions électriques correspondantes, dispositif caractérisé en ce que les repères (2, 6, 7) présentent des bandes de couleur (2) qui sont disposées sans intervalle, en ce qu'au moins une bande de couleur (2) a sa luminosité ou sa couleur qui, d'une température déterminée, change brusquement, en ce que le capteur (1) comprend un transducteur qui réagit au changement brusque de la luminosité ou de la couleur d'au moins l'une des bandes de couleur (2) et délivre une série d'impulsions électriques en fonction d'au moins l'une des bandes de couleur détectées, la vitesse de rotation de l'arbre étant détectée à partir de l'intervalle de temps entre la survenance de deux flancs homologues de la série d'impulsions comme durée de période (T1, T2, T3) et la température de l'arbre (4) étant détectée à partir du taux d'impulsions qui est le taux à partir de l'intervalle de temps entre la survenance de deux flancs non homologues par rapport à la durée de période (T1, T2, T3).

2. Dispositif selon la revendication 1, caractérisé en ce que la bande de couleur (2) est une bande à cristaux liquides.

3. Dispositif pour la détection sans contact de la vitesse de rotation et de la température ambiante d'un arbre tournant avec des repères disposés de façon solidaire, de forme annulaire sur le pourtour de l'arbre et avec un capteur disposé en dehors de l'arbre en regard des repères, capteur qui détecte les repères et délivre des impulsions électriques correspondantes, dispositif caractérisé en ce que le capteur (1) est supporté d'une façon telle qu'il se déplace parallèlement à l'axe de l'arbre (4) en fonction de la température au voisinage de l'arbre (4) et de cette façon par rapport aux repères (9, 10) sur l'arbre (4), en ce que les repères (9, 10) ont une forme de trapèze, de triangle ou de gradins et ne se modifient pas en fonction de la température, et en ce que le capteur (1) délivre une série d'impulsions électriques selon sa position relative par rapport aux repères (9, 10) à partir des parties détectées des repères (9, 10), la vitesse de rotation de l'arbre (4) étant détectée à partir de l'intervalle de temps entre la survenance de deux flancs homologues de la série d'impulsions comme durée de période (T1, T2, T3) et la température ambiante de l'arbre (4) étant détectée à partir du taux d'impulsion qui est le taux à partir de l'intervalle de temps entre la survenance de deux flancs non homologues par rapport à la durée de période (T1, T2, T3) (fig. 3a, 3b).

4. Dispositif selon l'une des revendications précédentes, caractérisé en ce que le capteur (1) servant à détecter les repères (2, 6, 7 ; 9, 10 ; 13) comporte un barrage photoélectrique à réflexion constitué de préférence comme un circuit intégré.

5. Dispositif pour détecter sans contact la vitesse de rotation et la température ambiante d'un arbre tournant avec des repères disposés de façon solidaire, de forme annulaire sur le pourtour de l'arbre et avec un capteur disposé en dehors de l'arbre en regard des repères, capteur qui détecte les repères et délivre des impulsions électriques correspondantes, dispositif caractérisé en ce que les repères comportent des bandes de couleur de forme carrée, qui sont gradués différemment quant à la luminosité ou la couleur et sont disposés avec une luminosité croissante ou décroissante, les propriétés des repères ne variant pas en fonction de la température, en ce que le capteur (12) est disposé de façon fixe et en ce que sa sensibilité par rapport à la couleur des bandes de couleur varie en fonction de la température au voisinage de l'arbre (4), en ce que le capteur (12) détecte beaucoup de bandes de couleur différentes en fonction de sa sensibilité et délivre une série d'impulsions électriques en fonction des bandes de couleur détectées, la vitesse de rotation de l'arbre (4) étant détectée à partir de l'intervalle de temps entre la survenance de deux flancs homologues de la série d'impulsions comme durée de période (T1, T2, T3) et la température ambiante de l'arbre (4) étant détectée à partir du taux d'impulsion qui est le taux à partir de l'intervalle de temps entre la survenance de deux flancs non homologues par rapport à la durée de période (T1, T2, T3) (fig. 5a, 5b).

6. Dispositif selon la revendication 5, caractérisé en ce que le capteur (12) pour détecter les repères (13) est en contact thermique avec la source de chaleur de préférence avec la partie en fer ou l'enroulement du champ d'un moteur ou d'un générateur.

# FIG. 1a

# FIG. 1b

# FIG. 2

# FIG. 5a

# FIG. 5b

FIG. 3a

FIG. 3b

FIG. 4